# EUROPEAN PATENT APPLICATION

(11) **EP 1 102 141 A1**
(43) Date of publication of application: **23.05.2001**
(21) Application number: 00124322.9
(22) Date of filing: 16.11.2000
(51) Int. Cl.: G05D 7/06, B67D 5/08

(54) **Fluid control system and method with computer management**

(30) Priority: 16.11.1999 US 441329
(71) Applicant: Dresser Equipment Group, Inc., Carrolton, TX 75006 (US)
(72) Inventor: Taylor, Ken W., Oak Ridge, NC 27310 (US)
(74) Representative: HOFFMANN - EITLE

(57) **Abstract**

A fluid flow system, method, and computer program according to which the fluid is pumped through a conduit, and the flow rate of the fluid is measured. The fluid flow through the conduit is selectively controlled based on the measured flow rate, stored data, and other system parameters when appropriate.

## Description

### Background

This invention relates to a fluid control system and method and, more particularly, to such a system and method according to which a computer controls the fluid flow in accordance with a computer software program.

In fluid flow systems, such as gasoline services station installations, the gasoline is pumped from an underground storage tank, through a conduit, or tube, to a dispenser unit, and through a hose extending from the dispenser unit to a nozzle for dispensing the gasoline into a vehicle tank. A valve is provided to control the gasoline flow, and a meter is connected in the system for metering the flow so that the volume of gasoline dispensed can be displayed on the dispenser unit and the customer charged accordingly. The nozzle is provided with a valve for controlling the discharge rate which is actuated by a trigger, or lever, and is adapted to automatically shut off when the vehicle tank is filled.

However, several problems arise with these systems. For example, often when the dispensing of the gasoline starts and reaches full flow relatively quickly, the dispensing nozzle may shut off prematurely. Also, splash back and consequent spills often occur during the maximum dispensing flow rate. Further, it is difficult for the operator/customer to decrease the flow rate by releasing the trigger on the dispensing nozzle to partially close the nozzle valve and terminate the dispensing after a desired amount of gasoline has been dispensed. Also, if during dispensing, the customer drives off without removing the nozzle14 from the vehicle tank, the nozzle and its hose will separate from the dispenser, and the gasoline will spill out of the dispenser at a very high flow rate which could create a disastrous situation.

Therefore, what is need is a fluid flow system and method, and a computer program to implement same, which eliminates splash back, spills, and premature nozzle shut-off, allows the operator/customer to stop the dispensing after a precise volume of gasoline has been dispensed, and eliminates excessive spilling during drive-off conditions.

### Summary

According to the system, method, and computer program of the present invention, the fluid is pumped through a conduit, and the flow rate of the fluid is measured. The fluid flow through the conduit is controlled based on the measured flow rate of the fluid through the conduit.

The fluid flow is controlled in a manner such that premature nozzle shut-off and the problems usually encountered with "difficult fill" vehicles are reduced or eliminated. Also, the operator/customer can stop the dispensing after a precise volume of gasoline has been dispensed, and excessive spilling during drive-off conditions is eliminated by regulating the flow to the vehicle to an optimum rate.

### Brief Description of the Drawings

Fig. 1 is an isometric view of the hose handling and guide system according to an embodiment of the present invention.

Fig. 2 is a schematic view of the fluid flow system of the embodiment of Fig. 1.

Fig. 3 is a view similar to that of Fig. 2 but depicting an alternate embodiment of the present invention.

Fig. 4 is a chart depicting the fluid flow control management according to the embodiments of the present invention.

### Detailed Description

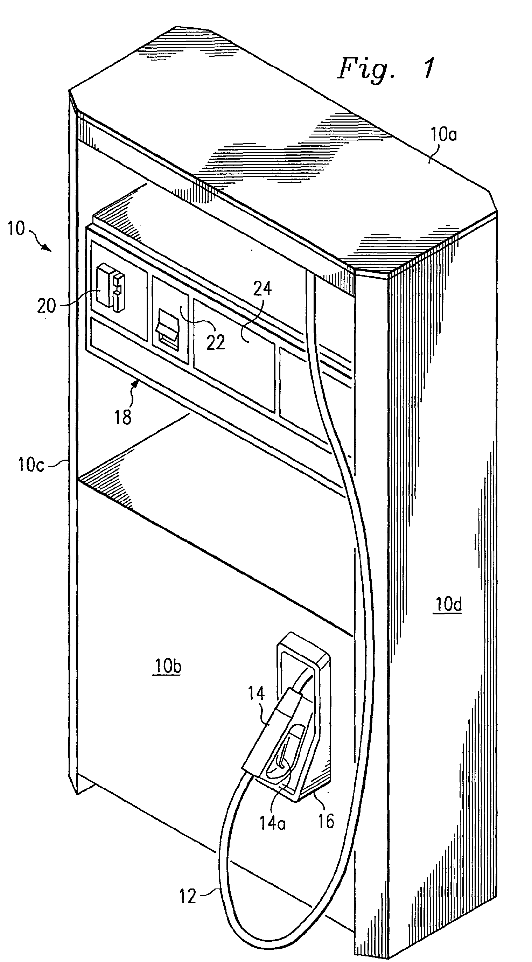

With reference to Fig. 1, the fluid flow system of an embodiment of the present invention will be described, by means of example, as a gasoline dispensing system for dispensing gasoline to vehicles at a service station, or the like. To this end, the reference numeral 10 refers, in general, to a dispenser unit having an upper housing 10a and a lower housing 10b connected by two spaced upright support members 10c and 10d.

Hydraulics are provided that include one or more conduits or tubes (not shown) connected to one or more underground tanks for storing the gasoline to be dispensed. These conduits extend from the lower housing 10b through one of the support members 10c and 10d to the upper housing 10a for passing gasoline to one end of a hose 12 which extends from the upper housing 10a. The other end of the hose 12 is connected to a nozzle 14 for dispensing gasoline from the storage tank to a vehicle. The nozzle 14 has a valve 14a for controlling the dispensing rate which valve is normally closed but can be opened by a trigger, or lever, 14b that can be manually actuated in a conventional manner. Although not shown in the drawings, it is understood that the nozzle 14 includes an interlock that prevents the opening of the valve under relatively low pressure conditions as will be described. A boot 16 is provided on the front panel of the lower housing 10b for receiving the nozzle 14 during non-use.

An electronics housing 18 is provided between the upper housing 10a and the lower housing 10b, and contains various electronic components, including a credit card reader 20, a receipt dispenser 22, and a display 24 which displays the volume of gasoline dispensed and the cost of same. The respective fronts of the reader 20, the receipt dispenser 22, and the display 24 extend through the front panel, or bezel, of the housing 18.

Although not shown in the drawing, it is understood that a boot, identical to the boot 16, is provided on the opposite, or rear, panel of the housing 10b which receives a nozzle, identical to the nozzle 14, which extends from a hose identical to the hose 12. Also, the electronics housing 18 has a rear panel that receives a credit card reader, a receipt dispenser, and a display identical to the reader 20, the dispenser 22, and the display 24, respectively. Since all of this is conventional, it will not be described in further detail.

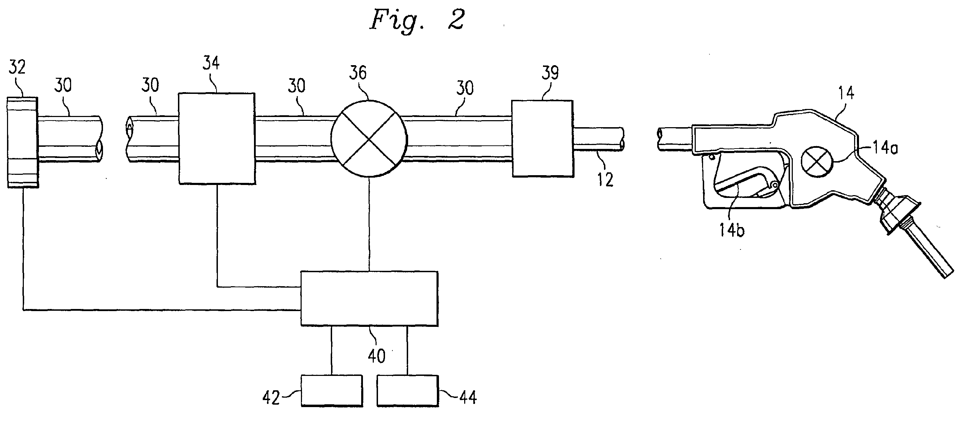

Referring to Fig. 2, one of the above-mentioned conduits extending from a storage tank (not shown) and through the dispenser unit 10 is referred to by the reference numeral 30. A pump 32 is provided at the storage tank or in the dispenser unit 10 and is connected to one end of the conduit 30 for pumping the fuel from the storage tank. A flow meter 34 is connected to the conduit 30 for metering the flow of the gasoline through the conduit. It is understood that the flow meter 34 is electrically connected to the display 24 (Fig. 1) for providing a display of the amount of gasoline dispensed and the cost of same, all in a conventional manner.

A flow control valve 36 is also connected to the conduit 30, preferably downstream of the flow meter 34, and operates in a conventional manner to control the flow of the gasoline through the conduit, and the amount that is dispensed into the vehicle tank under the additional control of the nozzle 14.

A fitting, or adapter, 38 is connected to the other end of the conduit 30 which permits the latter end to be connected to the hose 12, and therefore to the nozzle 14, in fluid flow communication.

The sections of the conduit 30 shown in Fig. 2, as well as the flow meter 34 and the valve 36, are all located in the dispenser unit 10. The fitting 38 is preferably located on the lower portion of the upper housing 10a of the dispenser unit 10, and the hose 12 extends from the latter fitting.

A control unit 40, preferably in the form of a computer, a microprocessor, a CPU, or the like, is provided and is electrically connected to the pump 32, the flow meter 34, and the valve 36. The control unit 40 is adapted to control the flow of the gasoline through the conduit 30 and, to this end, utilizes an imbedded software program that provides data, or information, relating to the type of gasoline being pumped, the pump's flow rate and delivery time, and the quantity of gasoline delivered, as well as information based on the pump's expected performance parameters (such as flow rates and pressures of the various grades of fuels and fuel temperatures), and actual performance data based on its operations over a recent period of time. The control unit is also adapted to receive input signals from the pump 32 corresponding to its operational status (on or off).

Also, the control unit also receives input signals from the flow meter 34 corresponding to the fluid flow rate in the conduit 30 and input signals based on actions by the operator/customer, including operation of the nozzle 14. The latter could include the fuel type selected, the payment method, the time of use of the nozzle, and other dispenser activated purchases, etc.

The control unit 40 generates output signals based on the above input signals which output signals are used to start and stop the pump 32 and control the valve 36. Thus, the control unit 40 can respond to the above input signals and generate corresponding output signals that control the pump 32 and regulate the valve 36 accordingly to stop, start, reduce, or increase the flow of the gasoline through the conduit 30, and therefore through the hose 12 and the nozzle 14, in a manner to be described. The control unit 40 also is adapted to activate the dispenser display 24 (Fig. 1) to give visual instructions or alerts to the operator/customer based on the foregoing.

In order to initiate operation of the dispenser unit 10, the operator/customer activates a main system switch (not shown), in the form of a push button, a lever, or the like, on the unit 10. This switch is connected to the control unit 40 which functions to start the pump 32 and open the valve 36 to allow the system pressure to build up. During this time, the valve in the nozzle 14 prevents dispensing of the gasoline. The valve 36 is controlled by the control unit 40 based on the above software and the input signals received from the flow meter 34 so that it will not allow full flow immediately even if the system pressure builds up to an acceptable value and the operator/customer fully opens the valve 14a of the nozzle 14 by actuating the trigger 14b. Rather, the control unit 40 partially opens the valve 36 to allow a relatively low flow rate, such as 5 gallons per minute, then progressively opens the valve fully over the next few seconds. After this start-up, if the delivery then proceeds normally, the valve 36 will attain a fully open position to establish a maximum flow rate, for example, 10 gallons per minute. This eliminates the premature shut-offs, splash backs, and spills discussed above.

The control unit 40 continually monitors the fueling process, and controls the valve 36 and the pump 32 based on the inputs to the control unit described above.

If a premature shut-off of the nozzle 14 still occurs even with the gradual increase in the flow rate described above, the control unit 40 will receive corresponding signals from the meter 34 and will partially close the valve 36 to reduce the flow rate to a predetermined level, such as 3 gallons per minute to permit dispensing at this rate. Then the control unit 40 will gradually reopen the valve 36 to a higher lever, such as 7 gallons per minute, over a relatively short period, such as 5 seconds. Once a relatively low volume of gasoline, such as 2 or 3 more gallons, has been dispensed, the control unit 40 opens the valve 36 to its fully open position to permit maximum flow. This also prevents splash back and spills.

During maximum flow, if the control unit 40 senses that the end of a delivery cycle is drawing near, based on the volume dispensed and/or the reduced flow rate caused by the operator/customer partially closing the nozzle valve, the control unit 40 moves the valve 36 to a partially closed position until an intermediate flow is achieved, such as 5 gallons per minute, and maintains it there until the end of the delivery. This slower flow rate assists the operator/customer in topping-off, or stopping on a desired dispensed amount. If this flow continues for more than a predetermined time interval, such as 10 seconds, the control unit 40 determines that the operator/customer is not in top-off or slow-down mode, and functions to open the valve 36 back to its full flow position over a predetermined period, such as 5 seconds.

If, during dispensing, the customer drives off without removing the nozzle 14 from the vehicle tank, causing the hose 12 and nozzle 14 to separate from the dispenser, the gasoline would flow at a very high flow rate in excess of the 10 gallons per minute maximum. In this situation, the control unit 40 receives signals from the meter 34 corresponding to the very high flow rate, and immediately shuts off the pump 32 and closes the valve 36 to terminate the flow of the gasoline. This, of course, eliminates a potentially disastrous spill of a relatively high volume of gasoline.

If the dispenser unit 10 is provided with a vapor recovery system, filling "top-offs" are either discouraged or, in some jurisdictions, not allowed. Thus, the control unit 40 could be programmed to sense manual shut-off of the nozzle 14 at very slow flow, after a considerable quantity of fuel has been delivered, which would indicate that the operator/customer is "topping-off'. After one or two top-offs, the control unit 40 could be programed to either terminate the delivery completely, or shut off flow for a relative short time, such as 10 seconds, to discourage the top-off activity.

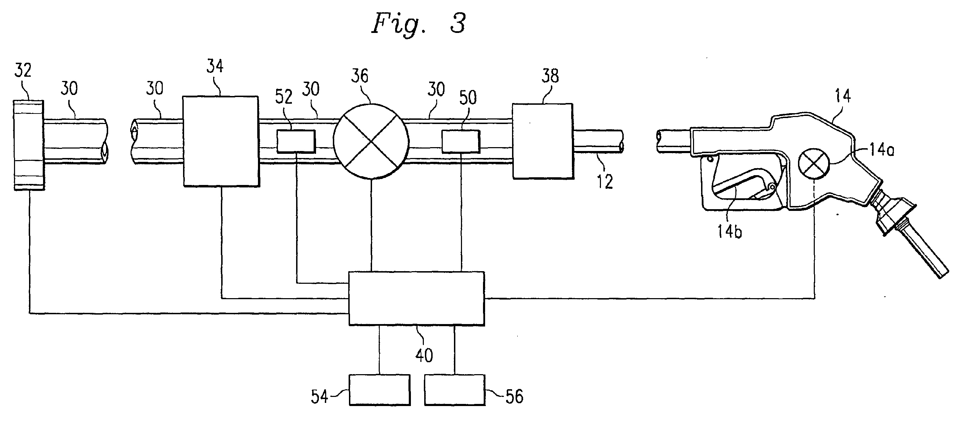

The system of Fig. 3 is similar to that of Fig. 2 and identical components are given the same reference numerals. According to the embodiment of Fig. 3, additional features are added to the embodiment of Fig. 2 to provide enhanced performance. More particularly, a pressure sensor 50 is provided in the conduit 30, preferably downstream of the valve 36, and functions to sense the pressure of fluid in the conduit and generate a corresponding output signal. A fuel temperature sensor 52 is also provided in the conduit 30 between the meter 34 and the valve 36 to measure the fuel temperature and output a corresponding signal to the control unit 40. Thus, as flow rates through the conduit 30 change, the system pressure, as sensed by the sensor 50, will change accordingly and a corresponding signal outputted to the control unit 40. Since fuel temperature changes will have some effect on pressure and flow rate, the output of the sensor 52 will provide additional information to the control unit 40 which will permit a more accurate control of the system as described above.

Also in the embodiment of Fig. 3, the control unit 40 is connected to the nozzle valve 14a to receive inputs from same based on the position of the valve, and therefore the amount of gasoline being dispensed from the nozzle 14, based, of course, on the flow rate through the conduit 30 and to the nozzle as sensed by the meter 34. This, of course, provides additional information to the control unit 40 to further aid in the flow control management discussed above.

An audio system 54 is also provided in the embodiment of Fig. 3 and is connected to the control unit 40. The system 54 is designed to give audible instructions or alerts to the operator/customer under control of the control unit 40. A kiosk alarm system 56 is also provided which, when activated, is adapted to provide station operator alerts. The control unit 40 is also connected to the system 56 for selectively activating same under certain conditions. For example, if, during dispensing, the customer drives off without removing the nozzle 14 from the vehicle tank, causing the problems discussed above, the control unit 40 can activate the system 56 to provide an alert to the station operator in the kiosk. Also, if a top-off occurs, the control unit 40 could be programed to provide a corresponding display on the display 24 and/or activate the systems 54 and 56.

The operation of the embodiment of Fig. 3 is the same as that of the embodiment of Fig. 2 but with the pressure sensor 50, the temperature sensor 52, and the connection to the nozzle valve 14a providing enhanced control of the system by the control unit 40.

In either or both of the above embodiments, it is understood that the control unit 40 can be programed to sample a multitude of deliveries and change the above-described operation accordingly especially with respect to the flow rates and time intervals. Also, the display 24 (Fig. 1) could be connected to the flow meter 24 in a manner to provide a read-out of the delivery rate in gallons per minute. The display 24 could also provide a display informing the operator/customer that the pump has switched to a higher or lower delivery rate to improve fueling performance. Also, a visual or audible alert could be provided to ask the operator/customer not to top-off if the system detects this activity.

A time-out safety shut down feature could be also be included if no fuel flow is detected for a specified time, but the dispenser is still turned on. This could occur if a operator/customer leaves without replacing the nozzle or switching off the pump, or has left the dispenser unattended for a period of time.

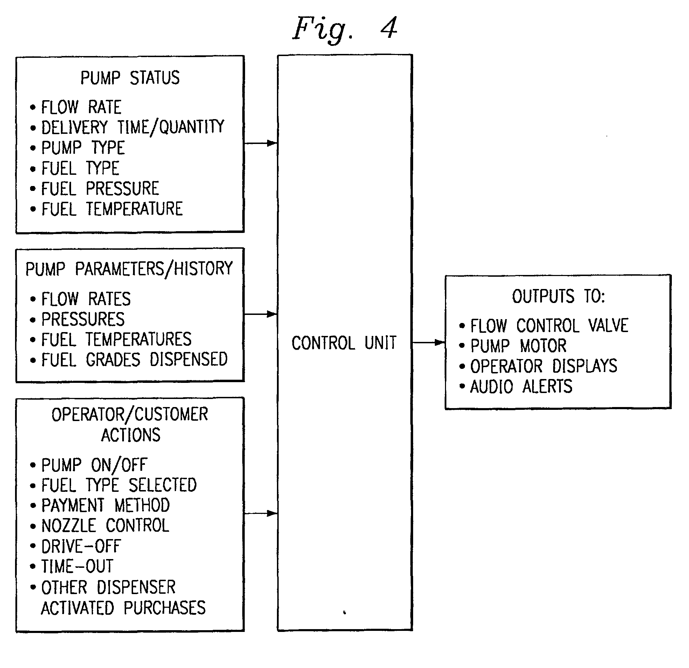

Fig. 4 is a flow management chart depicting the operation of the computer program of the present invention including the instructions regarding the above-mentioned inputs to, and the outputs from, the control unit 40 according to the embodiment of Fig. 3. Of course, the chart and instructions would be similar for the embodiment of Fig. 2 but would not include the additional features provided in the embodiment of Fig. 3, as discussed above.

Thus, both embodiments of the present invention provide a precise control of the entire gasoline dispensing process while eliminating premature nozzle shut-off, splash back, and spills. Also, the operator/customer can stop the dispensing after a precise volume of gasoline has been dispensed, and excessive spilling during drive-off conditions is eliminated.

Another advantage of the embodiments of the present invention is that, since a computer is usually utilized in a gasoline dispensing system, no additional hardware has to be added to the dispenser unit 10 to achieve the results noted above.

It is also understood that variations may be made in the foregoing without departing from the scope of the invention. For example, the specific flow rates, time intervals, and other operational parameters set forth above are for the purpose of example only, it being understood that they can vary within the scope of the invention. Also, references to "conduit", "hose", "tube", and the like are not meant to be limited to any particular fluid flow device and any such device or devices can be used throughout the system. Further, spatial references, such as "upper", "lower", "side", "front", and "rear" are for the purpose of illustration only and does not limit the specific orientation or location of the structure described above. Still further, the relative positions of the flow meter 34, the valve 36, the pressure sensor 50 and the temperature sensor 52 along the conduit 30 can be varied. Also, the system and method of the present invention is not limited to a gasoline dispensing system but is equally applicable to any fluid flow system.

Since other modifications, changes, and substitutions are intended in the foregoing disclosure, it is appropriate that the appended claims be construed broadly and in a manner consistent with the scope of the invention.

## Claims

1. A fluid flow system comprising a conduit for receiving the fluid, a flow meter connected to the conduit for measuring the flow rate of the fluid through the conduit, a valve connected to the conduit for controlling the fluid flow through the conduit, and a control unit connected to the flow meter for receiving signals from the flow meter corresponding to the flow rate of the fluid through the conduit, the control unit being connected to the valve for controlling the operation of the valve in response to the fluid flow rate to control the flow of fluid through the conduit based on the fluid flow rate.

2. The system of claim 1 further comprising a pump connected to the conduit for pumping the fluid through the conduit, the control unit being connected to the pump for receiving signals from the pump corresponding to the operation of the pump, wherein, upon initiation of the pump, the control unit gradually opens the valve to gradually raise the flow rate to its maximum value.

3. The system of claim 1 further comprising a nozzle for dispensing the fluid and for automatically shutting off when a predetermined amount of fluid has been dispensed, the control unit responding to a premature automatic shutting off of the nozzle and controls the valve to reduce the fluid flow rate.

4. The system of claim 3 wherein after controlling the valve to reduce the flow rate, the control unit further controls the valve to gradually increase the flow rate.

5. The system of claim 1 wherein, after a predetermined volume of fluid has been dispensed, the control unit controls the valve to reduce the fluid flow rate.

6. The system of claim 1 wherein the control unit responds to the fluid flow rate exceeding a predetermined normal maximum rate and controls the valve to shut off the fluid flow.

7. The system of claim 1 further comprising a pressure sensor disposed in the conduit for measuring the pressure of the fluid in the conduit, the control unit being connected to the pressure sensor for receiving signals from the pressure sensor corresponding to the pressure of the fluid in the conduit and further controlling the operation of the valve, and therefore the flow of fluid through the conduit, accordingly.

8. The system of claim 1 further comprising a temperature sensor disposed in the conduit for measuring the temperature of the fluid in the conduit, the control unit being connected to the temperature sensor for receiving signals from the temperature corresponding to the temperature of the fluid in the conduit and further controlling the operation of the valve, and therefore the flow of fluid through the conduit, accordingly.

9. A fluid flow method comprising the steps of pumping the fluid through a conduit, measuring the flow rate of the fluid through the conduit, and selectively controlling the fluid flow rate through the conduit based on the measured fluid flow rate.

10. The method of claim 9 further comprising the step of gradually raising the flow rate to its maximum value upon initiation of the step of pumping.

11. The method of claim 9 further comprising the steps of providing a nozzle for dispensing the fluid and reducing the fluid flow rate in response to a premature automatic shutting off of the nozzle.

12. The method of claim 11 further comprising the step of gradually increasing the flow rate for a predetermined time interval after the step of reducing.

13. The method of claim 9 further comprising the step of reducing the fluid flow rate after a predetermined volume of fluid has been dispensed.

14. The method of claim 9 further comprising the steps of responding to the fluid flow rate exceeding a predetermined normal maximum rate and shutting off the fluid flow.

15. The method of claim 9 wherein the fluid is pumped through the conduit by a pump and further comprising the step of further controlling the fluid flow rate through the conduit based on the type of gasoline being pumped, the pump's flow rate and delivery time, and/or the quantity of fuel delivered.

16. The method of claim 15 further comprising the step of further controlling the fluid flow rate through the conduit based on the pump's expected performance parameters and actual performance data based on its operations over a predetermined period of time.

17. The method of claim 16 wherein the performance parameters are flow rates and pressures of the various grades of fuels and fuel temperatures.

18. The method of claim 9 wherein the fluid is dispensed from a nozzle by an operator/customer and further comprising the step of further controlling the fluid flow rate through the conduit based on based on actions by the operator/customer, including operation of the nozzle.

19. The method of claim 25 wherein the actions by the customer further include the fuel type selected, the payment method, and the time of use of the nozzle.

20. A computer program for processing data relating to the operation of a fluid flow system, the program being stored on a computer-readable medium and comprising instructions for pumping the fluid through a conduit, measuring the flow rate of the fluid through the conduit, and controlling the fluid flow rate through the conduit based on the measured fluid flow rate.

21. The program of claim 20 further comprising instructions for gradually raising the flow rate to its maximum value upon initiation of the step of pumping.

22. The program of claim 20 further comprising instructions for providing a nozzle for dispensing the fluid and reducing the fluid flow rate in response to a premature automatic shutting off of the nozzle.

23. The program of claim 22 further comprising instructions for gradually increasing the flow rate for a predetermined time interval after the step of reducing.

24. The program of claim 20 further comprising instructions for reducing the fluid flow rate after a predetermined volume of fluid has been dispensed.

25. The program of claim 20 further comprising instructions for responding to the fluid flow rate exceeding a predetermined normal maximum rate and shutting off the fluid flow.

26. The program of claim 20 wherein the fluid is pumped through the conduit by a pump and further comprising instructions for further controlling the fluid flow rate through the conduit based on the type of gasoline being pumped, the pump's flow rate and delivery time, and/or the quantity of fuel delivered.

27. The program of claim 26 further comprising instructions for further controlling the fluid flow rate through the conduit based on the pump's expected performance parameters and actual performance data based on its operations over a predetermined period of time.

28. The program of claim 27 wherein the performance parameters are flow rates and pressures of the various grades of fuels and fuel temperatures.

29. The program of claim 20 wherein the fluid is dispensed from a nozzle by an operator/customer and further comprising instructions for further controlling the fluid flow rate through the conduit based on based on actions by the operator/customer, including operation of the nozzle.

30. The program of claim 29 wherein the actions by the customer further include the fuel type selected, the payment method, and the time of use of the nozzle.
